(19) Europäisches Patentamt
European Patent Office
Office européen des brevets

(11) EP 4 559 976 A1

(12) **EUROPEAN PATENT APPLICATION**

(43) Date of publication:
**28.05.2025 Bulletin 2025/22**

(21) Application number: **23211080.9**

(22) Date of filing: **21.11.2023**

(51) International Patent Classification (IPC):
***C08L 69/00*** *(2006.01)*

(52) Cooperative Patent Classification (CPC):
(C-Sets available)
**C08L 69/00; C08K 3/22; C08K 5/34924;**
C08K 3/2279 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **SHPP Global Technologies B.V.**
**4612 PX Bergen op Zoom (NL)**

(72) Inventors:
- **CHEN, Keran**
**Shanghai (CN)**
- **LIU, Xing**
**Shanghai (CN)**
- **ZHENG, Yun**
**Shanghai (CN)**

(74) Representative: **Modiano, Gabriella Diana et al**
**Modiano & Partners SA**
**Steinsdorfstraße 14**
**80538 München (DE)**

# (54) FLAME RETARDANT PC/PBT COMPOSITIONS WITH GOOD TRACKING INDEX, MODULUS AND IMPACT PROPERTIES

(57) Thermoplastic compositions include: from about 35 wt% to about 65 wt% of a polycarbonate (PC) homopolymer component; from about 5 wt% to about 30 wt% of a polybutylene terephthalate (PBT) component; from about 5 wt% to about 20 wt% of a core-shell acrylic polymer component; and from about 0.1 wt% to about 20 wt% of an aromatic bromine and cyanurate flame retardant component. The composition has a total siloxane content of no greater than 2.0 wt%. In some aspects the compositions have good comparative tracking index (CTI) properties in addition to good mechanical properties such as high modulus and impact resistance.

EP 4 559 976 A1

(52) Cooperative Patent Classification (CPC): (Cont.)

C-Sets
**C08L 69/00, C08K 5/34924, C08L 51/04,**
**C08L 67/02;**
**C08L 69/00, C08K 5/34924, C08L 51/085,**
**C08L 67/02**

## Description

### FIELD OF THE DISCLOSURE

The present disclosure relates to polycarbonate (PC) and polybutylene terephthalate (PBT) compositions, and in particular to PC/PBT compositions that have improved comparative tracking index and mechanical properties.

### BACKGROUND OF THE DISCLOSURE

Comparative tracking index (CTI) measures the maximum voltage (in volts) at which a material withstands 50 drops of contaminated water without tracking. Tracking is defined as the formation of conductive paths due to electrical stress, humidity, and contamination. Insulating materials should have a high comparative tracking index, defined as CTI 600V as measured in accordance with IEC60112 or CTI PLCO as measured in accordance with ASTM D3638. Thermoplastic polymers including blends of polycarbonate (PC) and polybutylene terephthalate (PBT) could be used as insulating materials in connectors of solar photovoltaic (PV), electric vehicles (EVs) and other electrical equipment. It has been difficult, however, to develop PC/PBT blends that have both a high CTI and also high modulus and impact resistance. High modulus and impact resistance are desirable for many high performance end products.

In some applications, brominated flame retardants such as those based on tetrabromobisphenol A (CAS 79-94-7), including brominated polycarbonate or other brominated aromatic oligomers, are included in flame retardant PC/PBT blends. Such blends may also include an impact modifier to improve modulus and impact resistance properties. Such conventional compositions, however, cannot achieve a high CTI property.

These and other shortcomings are addressed by aspects of the present disclosure.

### SUMMARY

Aspects of the disclosure relate to thermoplastic compositions including: from about 35 wt% to about 65 wt% of a polycarbonate (PC) homopolymer component; from about 5 wt% to about 30 wt% of a polybutylene terephthalate (PBT) component; from about 5 wt% to about 20 wt% of a core-shell acrylic polymer component; and from about 0.1 wt% to about 20 wt% of an aromatic bromine and cyanurate flame retardant component. The composition has a total siloxane content of no greater than 2.0 wt%. In some aspects the compositions have good comparative tracking index (CTI) properties in addition to good mechanical properties such as high modulus and impact resistance.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

Thermoplastic compositions according to the present disclosure include: from about 35 wt% to about 65 wt% of a polycarbonate (PC) homopolymer component; from about 5 wt% to about 30 wt% of a polybutylene terephthalate (PBT) component; from about 5 wt% to about 20 wt% of a core-shell acrylic polymer component; and from about 0.1 wt% to about 20 wt% of an aromatic bromine and cyanurate flame retardant component. The composition has a total siloxane content of no greater than 2.0 wt%. In some aspects the compositions have good comparative tracking index, high modulus, and good impact resistance properties. Properties are balanced by selection of flame retardant and impact modifier type and/or amount. In particular combining a flame retardant including aromatic bromine and cyanurate with an acrylic core-shell impact modifier may provide compositions with the desired properties.

**Definitions**

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate copolymer component" includes mixtures of two or more polycarbonate copolymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^{\,2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

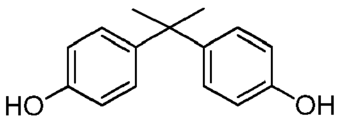

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Thermoplastic Compositions

Thermoplastic compositions according to aspects of the disclosure include: from about 35 wt% to about 65 wt% of a polycarbonate (PC) homopolymer component; from about 5 wt% to about 30 wt% of a polybutylene terephthalate (PBT)

component; from about 5 wt% to about 20 wt% of a core-shell acrylic polymer component; and from about 0.1 wt% to about 20 wt% of an aromatic bromine and cyanurate flame retardant component. The composition has a total siloxane content of no greater than 2.0 wt%. The combined weight percent value of all components does not exceed 100 wt%, and all weight percent values are based on the total weight of the composition.

The polycarbonate homopolymer component may include bisphenol-A (BPA) homopolymer in some aspects. Suitable polycarbonate homopolymers are available from SABIC. In some aspects the composition includes from about 35 wt% to about 65 wt% of the polycarbonate homopolymer component. In other aspects the composition includes at least 35 wt%, at least 37 wt%, at least 39 wt%, at least 41 wt%, at least 43 wt%, at least 45 wt%, at least 47 wt%, at least 49 wt%, at least 51 wt%, at least 53 wt%, at most 65 wt%, at most 63 wt%, at most 61 wt%, at most 59 wt%, at most 57 wt%, at most 55 wt%, at most 53 wt%, at most 51 wt%, at most 49 wt%, at most 47 wt%, or at most 45 wt% of the polycarbonate homopolymer component.

As used herein, "polybutylene terephthalate" (PBT) can be used interchangeably with poly(1,4-butylene terephthalate). Polybutylene terephthalate a polyester. Polyesters, which include poly(alkylene dicarboxylates), liquid crystalline polyesters, and polyester copolymers, can be useful in the thermoplastic compositions of the present disclosure. In some aspects the composition includes from about 5 wt% to about 30 wt% of a polybutylene terephthalate component. In further aspects the composition includes at least 7 wt%, at least 9 wt%, at least 11 wt%, at least 13 wt%, at least 15 wt%, at least 17 wt%, at least 19 wt%, at least 21 wt%, at least 23 wt%, at most 30 wt%, at most 28 wt%, at most 26 wt%, at most 24 wt%, at most 22 wt%, at most 20 wt%, at most 18 wt%, at most 16 wt%, or from 10 wt% to 30 wt% of the polybutylene terephthalate component.

The thermoplastic composition includes from about 5 wt% to about 20 wt% of the core-shell acrylic polymer component, which may function as an impact modifier. In some aspects the composition includes at least 5 wt%, at least 6 wt%, at least 7 wt%, at least 8 wt%, at least 9 wt%, at least 10 wt%, at least 11 wt%, at least 12 wt%, at least 13 wt%, at least 14 wt%, at least 15 wt%, at most 20 wt%, at most 19 wt%, at most 18 wt%, at most 17 wt%, at most 16 wt%, at most 15 wt%, at most 14 wt%, at most 13 wt%, at most 12 wt%, at most 11 wt%, at most 10 wt%, from 10 wt% to 15 wt%, or from 5 wt% to 15 wt% of the core-shell acrylic polymer component.

In certain aspects of the core-shell acrylic polymer component includes siloxane. Exemplary core-shell acrylic polymers that include siloxane are available from Mitsubishi Chemical, including but not limited to S-2501 (approximately 10 wt% siloxane), S-2200 (approximately 8 wt% siloxane), and S-2030 (approximately 30 wt% siloxane).

In further aspects the core-shell acrylic polymer does not include siloxane. Examples include, but are not limited to, a core-shell acrylic polymer based on 2-propenoic acid and butyl acrylate-methyl methacrylate (CAS Nos. 31261-08-2 and 25852-37-3, available from Dow) and a core-shell acrylic polymer based on butyl acrylate-methyl methacrylate (CAS No. 25852-37-3, available from Dow).

The composition has a total siloxane content of no greater than 2.0 wt%. In further aspects the composition has a total siloxane content of at most 1.9 wt%, at most 1.8 wt%, at most 1.7 wt%, at most 1.6 wt%, at most 1.5 wt%, at most 1.4 wt%, at most 1.3 wt%, at most 1.2 wt%, at most 1.1 wt%, at most 1.0 wt%, at least 0.1 wt%, at least 0.2 wt%, at least 0.3 wt%, at least 0.4 wt%, at least 0.5 wt%, at least 0.6 wt%, at least 0.7 wt%, at least 0.8 wt%, or at least 0.9 wt%.

The thermoplastic compositions include from about 0.1 wt% to about 20 wt% of an aromatic bromine and cyanurate flame retardant component. An exemplary aromatic bromine and cyanurate flame retardant component is FR-245, available from ICL, which is a tri(tribromophenyl) cyanurate (CAS: 25713-60-4) having a bromine content of about 67 wt%. In some aspects the composition includes at least 0.1 wt%, at least 0.3 wt%, at least 0.5 wt%, at least 0.7 wt%, at least 1 wt%, at least 2 wt%, at least 3 wt%, at least 4 wt%, at least 5 wt%, at least 6 wt%, at least 7 wt%, at least 8 wt%, at least 9 wt%, at least 10 wt%, at most 20 wt%, at most 19 wt%, at most 18 wt%, at most 17 wt%, at most 16 wt%, at most 15 wt%, at most 14 wt%, at most 13 wt%, at most 12 wt%, at most 11 wt%, or at most 10 wt%, of the aromatic bromine and cyanurate flame retardant component. As demonstrated in the Examples, it has been found that PC/PBT compositions including an aromatic bromine and cyanurate flame retardant have improved properties such as CTI and mechanical performance as compared to compositions including other flame retardants, including brominated flame retardants such as brominated PC.

In certain aspects the composition further includes a flame retardant synergist that may help to further improve the FR properties of the composition. An exemplary FR synergist is $Sb_2O_3$/PBT (80/20 wt%), available from SABIC. In particular aspects the composition includes from about 0.5 wt% to about 8 wt% of the FR synergist. In further aspects the composition includes at least 0.5 wt%, at least 1.0 wt%, at least 1.5 wt%, at least 2.0 wt%, at least 2.5 wt%, at least 3.0 wt%, at least 3.5 wt%, at least 4.0 wt%, at most 8 wt%, at most 7.5 wt%, at most 7.0 wt%, at most 6.5 wt%, at most 6.0 wt%, at most 5.5 wt%, at most 5.0 wt%, or at most 4.5 wt%, of the FR synergist.

In some aspects the composition further includes from greater than 0 wt% to about 15 wt% of a polycarbonate copolymer component. In particular aspects the composition includes at least 0.1 wt%, at least 0.5 wt%, at least 1 wt%, at least 2 wt%, at least 3 wt%, at least 4 wt%, at least 5 wt%, at least 6 wt%, at least 7 wt%, at least 8 wt%, at least 9 wt%, at least 10 wt%, at most 15 wt%, at most 14 wt%, at most 13 wt%, at most 12 wt%, or at most 11 wt% of the polycarbonate copolymer component.

The polycarbonate copolymer component may in certain aspects include isophthalate-terephthalate-resorcinol ester monomer units and bisphenol-A monomer units, sebacic acid monomer units and bisphenol-A monomer units, a polycarbonate-siloxane copolymer, or a combination thereof.

The polycarbonate copolymer component may include a copolyestercarbonate in some aspects. The copolyestercarbonate copolymer may include ester units of the formula

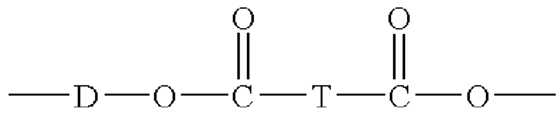

wherein D is a divalent group derived from a dihydroxy compound, and may be, for example, a $C_{2-30}$ alkylene group, a $C_{3-30}$ alicyclic group, a $C_{6-30}$ aromatic group or a polyoxyalkylene group in which the alkylene groups contain 2 to 6 carbon atoms, specifically 2, 3, or 4 carbon atoms; and T divalent group derived from a dicarboxylic acid, and may be, for example, a $C_{2-30}$ alkylene group, a $C_{6-30}$ alicyclic group, a $C_{6-30}$ alkyl aromatic group, or a $C_{6-30}$ aromatic group.

Examples of aromatic dicarboxylic acids from which the T group in the ester is derived include isophthalic or terephthalic acid, 1,2-di(p-carboxyphenyl)ethane, 4,4'-dicarboxydiphenyl ether, 4,4'-bisbenzoic acid, and combinations including at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid includes a combination of isophthalic acid and terephthalic acid wherein the weight ratio of isophthalic acid to terephthalic acid is 99:1 to 1:99. In an aspect, D is a $C_{2-6}$ alkylene group and T is p-phenylene, m-phenylene, naphthalene, a divalent cycloaliphatic group, or a combination thereof. This class of polyester includes the poly(alkylene terephthalates).

In an aspect, the ester units of the polyester or polyester block include arylate ester units derived from the reaction product of one equivalent of an isophthalic acid derivative and/or terephthalic acid derivative with a resorcinol of the formula

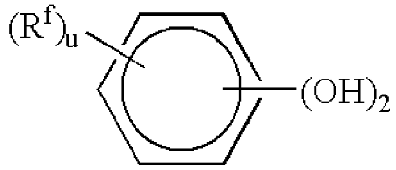

wherein each $R^f$ is independently $C_{1-12}$ alkyl, or halogen, and u is 0 to 4. It will be understood that $R^f$ is hydrogen when u is 0. Typically, the halogen can be chlorine or bromine. In an aspect, compounds in which the -OH groups are substituted meta to one another, and wherein $R^f$ and u are as described above, are also generally referred to herein as resorcinols. Examples of compounds that may be represented by this formula include resorcinol (where u is 0), substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations including at least one of the foregoing compounds.

Such arylate ester units are also referred to herein as isophthalate-terephthalate-resorcinol ester units, sometimes referred to in abbreviated form as ITR ester units. As used herein, isophthalate-terephthalate-resorcinol ester units include a combination isophthalate esters, terephthalate esters, and resorcinol esters. In a specific aspect, isophthalate-terephthalate-resorcinol ester units include a combination of isophthalate-resorcinol ester units and terephthalate-resorcinol ester units. In a specific aspect, where u is 0, the arylate ester units include isophthalate-terephthalate-resorcinol ester units in which the resorcinol is 1,3-dihydroxybenzene. Exemplary aromatic polyester blocks include poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination including at least one of these. In an aspect, a useful arylate polyester block is a poly(isophthalate-terephthalate-resorcinol) ester. In a particular aspect the copolyestercarbonate copolymer includes ITR blocks and polycarbonate blocks, as shown in the formula below:

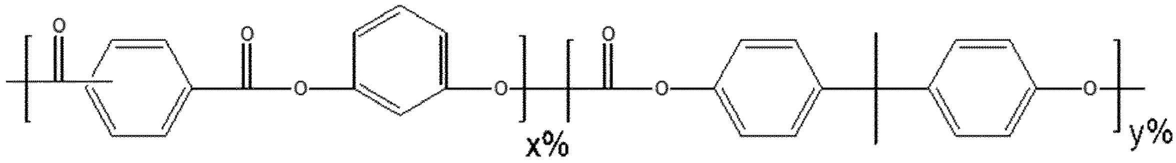

wherein x is the mole % of the ITR ester block and y is the mole % of the polycarbonate block. An exemplary copolyestercarbonate copolymer is SLX 20/80 resin, available from SABIC. SLX 20/80 includes 20 mole % ITR blocks and 80 mole % PC blocks.

In yet further aspects the copolyestercarbonate copolymer has a mole % ratio of ITR ester units to polycarbonate monomer units of from about 15:85 to about 95:5, or from about 20:80 to about 90:10, or from about 15:85 to about 25:75, or from about 18:82 to about 22:78, or about 20:80, or from about 85:15 to about 95:5, or from about 88:12 to about 92:8, or about 90:10.

In some aspects the polycarbonate copolymer component includes a polycarbonate-siloxane copolymer having a siloxane content of from about 5 wt% to about 45 wt%, based on the total weight of the polycarbonate-siloxane copolymer component. In further aspects the polycarbonate-siloxane copolymer has a siloxane content of from about 4-8 wt% (e.g., transparent EXL available from SABIC having a siloxane content of about 6 wt%), from about 18-22 wt% (e.g., opaque EXL available from SABIC having a siloxane content of about 20 wt%), and/or from about 35-45 wt% (such as a 40 wt% siloxane copolymer available from SABIC).

In specific aspects the composition includes a PC copolymer such as a sebacic acid/BPA PC copolymer including sebacic acid monomer units and bisphenol-A monomer units. Sebacic acid has the following structure:

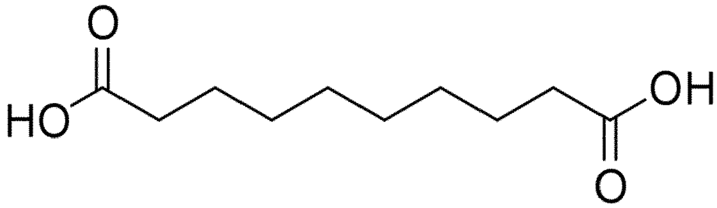

Bisphenol-A has the structure:

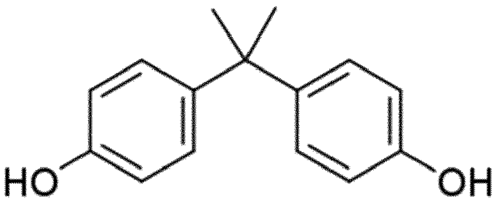

As a copolymer, the sebacic acid monomer provides the copolymer with good flow and ductility properties at a lower processing temperature, while the BPA monomer provides improved heat and modulus properties. Exemplary sebacic acid/BPA copolymers include a high molecular weight (Mw) high flow/ductile (HFD) polycarbonate, a low Mw HFD polycarbonate, or a combination thereof. In certain aspects the composition includes a polycarbonate copolymer component including from about 0.1 mol% to about 10 mol% sebacic acid monomer units and from about 90 mol% to about 99.9 mol% bisphenol-A monomer units.

In some aspects the composition includes at least one additional additive. The at least one additional additive may include, but is not limited to, an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof. In certain aspects the composition of includes from about 0.1 wt% to about 8 wt% of the at least one additional additive. In further aspects the composition includes at least 0.1 wt%, at least 0.3 wt%, at least 0.5 wt%, at least 0.7 wt%, at least 0.9 wt%, at least 1.1 wt%, at least 1.3 wt%, at least 1.5 wt%, at least 2.0 wt%, at least 2.5 wt%, at most 8 wt%, at most 7.5 wt%, at most 7.0 wt%, at most 6.5 wt%, at most 6.0 wt%, at most 5.5 wt%, at most 5.0 wt%, at most 4.5 wt%, at most 4.0 wt%, at most 3.5 wt%, or at most 3.0 wt%, of the at least one additional additive.

Compositions according to aspects of the disclosure may have improved properties as compared to conventional compositions, and in particular to conventional compositions that do not include the aromatic bromine and cyanurate flame retardant component. In certain aspects the composition has a comparative tracking index (CTI) of CTI 600V as measured

in accordance with IEC60112, or a CTI PLCO as measured in accordance with ASTM D3638.

In some aspects the composition has a flexural modulus of at least 1.9 gigapascals (GPa) as measured at a speed of 1.27 mm/min according to ASTMD790. In further aspects the composition has a flexural modulus of at least 1.95 GPa, at least 2.0 GPa, at least 2.05 GPa, at least 2.1 GPa, or at least 2.15 GPa, as measured at a speed of 1.27 mm/min according to ASTMD790.

In particular aspects the composition has a notched Izod impact strength of at least 650 joules per meter (J/m) at 25 °C as determined in accordance with ASTM D256. In other aspects the composition has a notched Izod impact strength of at least 675 J/m, at least 700 J/m, at least 725 J/m, at least 750 J/m, at least 775 J/m, at least 800 J/m, at least 825 J/m, or at least 850 J/m, at 25 °C as determined in accordance with ASTM D256.

In other aspects the composition has a V0 flame retardancy rating as tested at a thickness of 1.0 millimeter (mm) in accordance with UL94.

In specific aspects the composition has a p(FTP) flame retardancy performance of at least 0.9 as tested at a thickness of 1.0 mm in accordance with UL94. In certain aspects the composition has a p(FTP) flame retardancy performance of at least 0.91, at least 0.92, at least 0.93, at least 0.94, at least 0.95, at least 0.96, at least 0.97, at least 0.98, or at least 0.99, as tested at a thickness of 1.0 mm in accordance with UL94.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In certain aspects the article is an electrical connector, insulating housing, an insulating material for a solar photovoltaic or electric vehicle, or other electrical equipment component.

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1. A thermoplastic composition comprising:

from about 35 wt% to about 65 wt% of a polycarbonate (PC) homopolymer component;
from about 5 wt% to about 30 wt% of a polybutylene terephthalate (PBT) component;
from about 5 wt% to about 20 wt% of a core-shell acrylic polymer component; and
from about 0.1 wt% to about 20 wt% of an aromatic bromine and cyanurate flame retardant component,
wherein the composition has a total siloxane content of no greater than 2.0 wt%, and
wherein the combined weight percent value of all components does not exceed 100 wt%, and all weight percent values are based on the total weight of the composition.

Aspect 2. The thermoplastic composition according to Aspect 1, wherein the flame retardant component comprises tri(tribromophenyl) cyanurate.
Aspect 3. The thermoplastic composition according to Aspect 1 or 2, wherein the composition further comprises from greater than 0 wt% to about 15 wt% of a polycarbonate copolymer component.
Aspect 4. The thermoplastic composition according to Aspect 3, wherein the polycarbonate copolymer component comprises isophthalate-terephthalate-resorcinol ester monomer units and bisphenol-A monomer units, sebacic acid monomer units and bisphenol-A monomer units, a polycarbonate-siloxane copolymer, or a combination thereof.
Aspect 5. The thermoplastic composition according to Aspect 4, wherein the polycarbonate copolymer component comprises from about 0.1 mol% to about 10 mol% sebacic acid monomer units and from about 90 mol% to about 99.9 mol% bisphenol-A monomer units.
Aspect 6. The thermoplastic composition according to Aspect 4, wherein the polycarbonate copolymer component comprises a polycarbonate-siloxane copolymer, and wherein the polycarbonate siloxane copolymer has a siloxane content of from about 5 wt% to about 45 wt%.
Aspect 7. The thermoplastic composition according to any of Aspects 1 to 6, wherein the core-shell acrylic polymer component comprises siloxane.
Aspect 8. The thermoplastic composition according to any of Aspects 1 to 7, wherein the composition comprises at least one additional additive.
Aspect 9. The thermoplastic composition according to Aspect 8, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.
Aspect 10. The thermoplastic composition according to Aspect 8 or 9, wherein the composition comprises from about 0.1 wt% to about 8 wt% of the at least one additional additive.
Aspect 11. The thermoplastic composition according to any of Aspects 1 to 10, wherein the composition has a comparative tracking index (CTI) of CTI 600V as measured in accordance with IEC60112, or a CTI PLCO as measured in accordance with ASTM D3638.
Aspect 12. The thermoplastic composition according to any of Aspects1 to 11, wherein the composition has a flexural modulus of at least 1.9 gigapascals (GPa) as measured at a speed of 1.27 mm/min according to ASTMD790.
Aspect 13. The thermoplastic composition according to any of Aspects 1 to 12, wherein the composition has a notched Izod impact strength of at least 650 joules per meter (J/m) at 25 °C as determined in accordance with ASTM D256.
Aspect 14. The thermoplastic composition according to any of Aspects 1 to 13, wherein the composition has a V0 flame retardancy rating as tested at a thickness of 1.0 millimeter (mm) in accordance with UL94.
Aspect 15. The thermoplastic composition according to any of Aspects 1 to 14, wherein the composition has a p(FTP) flame retardancy performance of at least 0.9 as tested at a thickness of 1.0 mm in accordance with UL94.
Aspect 16. An article comprising the thermoplastic composition according to any of Aspects 1 to 15.
Aspect 17. The article of Aspect 16, wherein the article is an electrical connector, insulating housing, an insulating material for a solar photovoltaic or electric vehicle, or other electrical equipment component.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be

accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein included one or more of the components described in Table 1:

**Table 1 - Raw Materials**

| Component | Description | CAS number | Product supplier | Function |
|---|---|---|---|---|
| PC homopolymer | Polycarbonate homopolymer | 111211-39-3 | SABIC | Resin |
| PC copolymer (ITR) | PCP capped 20 mol% ITR/PC copolymer, poly(ester carbonate) with resorcinol units | 235420-85-6 | SABIC | Resin |
| PC copolymer (HFD) | PCP capped 6 mol% sebacic acid high-flow ductile PC copolymer | 137397-37-6 | SABIC | Resin |
| PC copolymer (40% Si) | 40 wt% PC-Siloxane copolymer | 202483-49-6 | SABIC | Resin |
| PBT | 315 PBT Poly(butylene terephthalate) | 26062-94-2 | SABIC | Resin |
| FR-245 | Tri(tribromophenyl) cyanurate, 67 wt% bromine | 25713-60-4 | ICL | FR |
| Brominated PC | Brominated PC ~26wt% Br | 156042-31-8 | SABIC | FR |
| $Sb_2O_3$/PBT | $Sb_2O_3$/PBT 80/20 wt% | 1309-64-4/ 26062-94-2 | SABIC | FR synergist |
| CSAP1 | Core-shell acrylic polymer based on 2-propenoic acid and butyl acrylate-methyl methacrylate, 0 wt% siloxane | 31261-08-2/ 25852-37-3 | Dow | Impact modifier |
| CSAP2 | Core-shell acrylic polymer based on butyl acrylate-methyl methacrylate, 0 wt% siloxane | 25852-37-3 | Dow | Impact modifier |
| S-2501 | Core-shell acrylic polymer, ~ 10 wt% siloxane | 143106-82-5 | Mitsubishi Chemical | Impact modifier |
| S-2200 | Core-shell acrylic polymer, ~ 8 wt% siloxane | 301857-66-9 | Mitsubishi Chemical | Impact modifier |
| S-2030 | Core-shell acrylic polymer, ~ 30 wt% siloxane | 882034-28-8 | Mitsubishi Chemical | Impact modifier |
| AX8900 | Ethylene-methylacrylate-glycidylmethacrylate copolymer (E-MA-GMA) (not core-shell) | 51541-08-3 | SK Chemical | Impact modifier |
| AX8840 | E-GMA copolymer (not core-shell) | 26061-90-5 | SK Chemical | Impact modifier |
| Irganox® 1010 | Pentaerythritol tetrakis (3,5-di-tert-butyl-4-hydroxyhydrocinnamate) | 6683-19-8 | BASF | AO Additive |
| AO 412S | Pentaerythritol tetrakis-(3-dodecvlthiopropionate) | 29598-76-3 | ADEKA | AO Additive |
| PETS | Pentaerythritol Tetrastearate | 115-83-3 | FACI | MR Additive |
| UV234 | hydroxyphenyl benzotriazole | 70321-86-7 | BASF | UV Additive |
| MZP | Zinc Dihydrogen Phosphate | 13598-37-3 | Budenheim | Quencher |

(continued)

| Component | Description | CAS number | Product supplier | Function |
|---|---|---|---|---|
| ADR 4468 | Joncryl® ADR 4468, polymeric epoxy chain extender | 01-00-2 | BASF | Chain extender |
| TSAN | PTFE encapsulated Styrene acrylonitrile copolymer | 9002-84-0/ 9003-54-7 | SABIC | FR |
| Carbon black | Carbon black | 1333-86-4 | CABOT | Colorant |
| $TiO_2$ | Titanium dioxide | 13463-67-7 | Kronos | Colorant |

Pellets were compounded in a laboratory twin-screw extruder (Coperion ZSK-26Mc) with all components fed from main throat. The compounding proceeded under screw rotation at 200 revolutions per minute (rpm) with a throughput of 20 kilograms per hour (kg/h). Temperature profiles for the compounding are provided in Table 2:

**Table 2 - Compounding Temperature Profiles**

| Compounder Type | Unit | ZSK-26Mc |
|---|---|---|
| Barrel Size | mm | 1000 |
| Die | mm | 4.4 |
| Feed (Zone 0) temperature | °C | 25-40 |
| Zone 1 temperature | °C | 50 |
| Zone 2 temperature | °C | 100 |
| Zone 3 temperature | °C | 200 |
| Zones 4-12 temperature | °C | 260 |
| Die temperature | °C | 260 |

Injection molding was performed on a FANUC S-2000i molding machine to form various bars for the tensile, flexural, impact, and CTI testing. A Netstal SynErgy 1500k/230 molding machine was used to form the test bars for the UL94 FR testing. Typical specimen injection molding conditions are provided in Table 3:

**Table 3 - Typical Specimen Injection Molding Conditions**

| Molding parameters | Unit | Value |
|---|---|---|
| Pre-drying time | Hour | 4 |
| Pre-drying temperature | °C | 120 |
| Zones 1-3 temperature | °C | 260 |
| Nozzle temperature | °C | 260 |
| Mold temperature | °C | 80 |

Specific gravity was evaluated according to ASTM D792. Melt flow rate (MFR) was evaluated at 250 °C with a 5.0 kg load according to ASTM D1238. Tensile tests were evaluated at a speed of 50 millimeters per minute (mm/min) according to ASTM D638. Flexural testing was performed at a speed of 1.27 mm/min according to ASTMD790. Notched Izod impact (NII) testing was evaluated according to ASTM D256 at the temperatures indicated in the tables (Room Temperature (RT) is 25 °C). Flame retardancy (Vx) was evaluated using 1.0 mm thick bars according to UL94. FOT refers to flame out time. The p(FTP) value is a statistical evaluation of the robustness of UL94 V0 performance. When the p(FTP) value is one or nearly one the material is expected to consistently meet the UL94 V0 rating. CTI was evaluated according to ASTM D3638.

Comparative and example compositions were prepared as set forth in Tables 4A-4D:

**Table 4A - Example and Comparative Compositions**

| Component | C.01 | C.02 | Ex.01 | Ex.02 | C.03 | C.04 |
|---|---|---|---|---|---|---|
| PC homopolymer | 36.24 | 26.24 | 51.24 | 41.24 | 51.54 | 51.54 |
| PC copolymer (ITR) | | | | | | |
| PC copolymer (HFD) | | | | | | |
| PC copolymer (40% Si) | | | | | | |
| PBT | 15 | 25 | 15 | 25 | 15 | 15 |
| FR-245 | | | 10 | 10 | 10 | 10 |
| Brominated PC | 25 | 25 | | | | |
| $Sb_2O_3$/PBT | 4.5 | 4.5 | 4.5 | 4.5 | 4.5 | 4.5 |
| TSAN | 0.8 | 0.8 | 0.8 | 0.8 | 0.8 | 0.8 |
| CSAP1 | | | | | | |
| CSAP2 | | | | | | |
| S-2501 | 15 | 15 | 15 | 15 | | |
| S-2200 | | | | | 5 | 10 |
| S-2030 | | | | | 10 | 5 |
| AX8900 | | | | | | |
| AX8840 | | | | | | |
| AO 1010/412S/ PETS/UV234/ MZP/ADR4468 | 1.46 | 1.46 | 1.46 | 1.46 | 1.16 | 1.16 |
| Carbon Black/TiO2 | 2 | 2 | 2 | 2 | 2 | 2 |
| Siloxane content in total formulation (wt%) | 1.5 | 1.5 | 1.5 | 1.5 | 3.4 | 2.3 |
| Br content in total formulation (wt%) | 6.5 | 6.5 | 6.7 | 6.7 | 6.7 | 6.7 |

**Table 4B - Example and Comparative Compositions**

| Component | C.05 | Ex.03 | C.06 | C.07 | Ex.04 | Ex.05 |
|---|---|---|---|---|---|---|
| PC homopolymer | 51.34 | 51.34 | 51.54 | 51.54 | 54.34 | 56.84 |
| PC copolymer (ITR) | | | | | | |
| PC copolymer (HFD) | | | | | | |
| PC copolymer (40% Si) | | | | | | |
| PBT | 15 | 15 | 15 | 15 | 15 | 15 |
| FR-245 | 10 | 10 | 10 | 10 | 9 | 9 |
| Brominated PC | | | | | | |
| $Sb_2O_3$/PBT | 4.5 | 4.5 | 4.5 | 4.5 | 2.5 | 2.5 |
| TSAN | 0.8 | 0.8 | 0.8 | 0.8 | 0.8 | 0.8 |
| CSAP1 | | 15 | | | 15 | 12.5 |
| CSAP2 | | | | | | |
| S-2501 | | | | | | |
| S-2200 | | | | | | |
| S-2030 | 15 | | | | | |
| AX8900 | | | 15 | | | |
| AX8840 | | | | 15 | | |

(continued)

| Component | C.05 | Ex.03 | C.06 | C.07 | Ex.04 | Ex.05 |
|---|---|---|---|---|---|---|
| AO 1010/412S/ PETS/UV234/ MZP/ADR4468 | 1.36 | 1.36 | 1.16 | 1.16 | 1.36 | 1.36 |
| Carbon Black/TiO2 | 2 | 2 | 2 | 2 | 2 | 2 |
| Siloxane content in total formulation (wt%) | 4.5 | 0 | 0 | 0 | 0 | 0 |
| Br content in total formulation (wt%) | 6.7 | 6.7 | 6.7 | 6.7 | 6.0 | 6.0 |

**Table 4C - Example and Comparative Compositions**

| Component | Ex.06 | Ex.07 | Ex.08 | Ex.09 | Ex.10 | Ex.11 |
|---|---|---|---|---|---|---|
| PC homopolymer | 44.34 | 54.54 | 54.54 | 44.54 | 54.04 | 56.99 |
| PC copolymer (ITR) | | | | | | |
| PC copolymer (HFD) | | | | | | |
| PC copolymer (40% Si) | | | | | | |
| PBT | 25 | 15 | 15 | 25 | 15 | 15 |
| FR-245 | 9 | 9 | 9 | 9 | 10 | 10 |
| Brominated PC | | | | | | |
| $Sb_2O_3$/PBT | 2.5 | 2.5 | 2.5 | 2.5 | 3.5 | 3.5 |
| TSAN | 0.8 | 0.8 | 0.8 | 0.8 | 0.8 | 0.4 |
| CSAP1 | 15 | 10 | | | 15 | 12.5 |
| CSAP2 | | | | | | |
| S-2501 | | | 15 | 15 | | |
| S-2200 | | 5 | | | | |
| S-2030 | | | | | | |
| AX8900 | | | | | | |
| AX8840 | | | | | | |
| AO 1010/412S/ PETS/UV234/ MZP/ADR4468 | 1.36 | 1.16 | 1.16 | 1.16 | 1.36 | 1.31 |
| Carbon Black/TiO2 | 2 | 2 | 2 | 2 | 0.3 | 0.3 |
| Siloxane content in total formulation (wt%) | 0 | 0.4 | 1.5 | 1.5 | 0 | 0 |
| Br content in total formulation (wt%) | 6.0 | 6.0 | 6.0 | 6.0 | 6.7 | 6.7 |

**Table 4D - Example and Comparative Compositions**

| Component | Ex.12 | C.08 | Ex.13 | Ex.14 | Ex.15 |
|---|---|---|---|---|---|
| PC homopolymer | 54.99 | 39.19 | 56.99 | 44.99 | 42.99 |
| PC copolymer (ITR) | | | | 10 | |
| PC copolymer (HFD) | | | | | 10 |
| PC copolymer (40% Si) | | | | | 2 |
| PBT | 15 | 15 | 15 | 15 | 15 |
| FR-245 | 10 | | 10 | 10 | 10 |
| Brominated PC | | 25.8 | | | |
| $Sb_2O_3$/PBT | 3.5 | 3.5 | 3.5 | 3.5 | 3.5 |
| TSAN | 0.4 | 0.4 | 0.4 | 0.4 | 0.4 |
| CSAP1 | 12.5 | 12.5 | | 12.5 | 12.5 |

(continued)

| Component | Ex.12 | C.08 | Ex.13 | Ex.14 | Ex.15 |
|---|---|---|---|---|---|
| CSAP2 | | | 12.5 | | |
| S-2501 | | | | | |
| S-2200 | | | | | |
| S-2030 | | | | | |
| AX8900 | | | | | |
| AX8840 | | | | | |
| AO 1010/412S/ PETS/UV234/ MZP/ADR4468 | 1.31 | 1.31 | 1.31 | 1.31 | 1.31 |
| Carbon Black/TiO2 | 2.3 | 2.3 | 2.3 | 2.3 | 2.3 |
| Siloxane content in total formulation (wt%) | 0 | 0 | 0 | 0 | 0.8 |
| Br content in total formulation (wt%) | 6.7 | 6.7 | 6.7 | 6.7 | 6.7 |

The compositions of Tables 4A-4D were evaluated for various properties; results are shown in Tables 5A-5D:

**Table 5A - Properties of Table 4A Compositions**

| Property | | C.01 | C.02 | Ex.01 | Ex.02 | C.03 | C.04 |
|---|---|---|---|---|---|---|---|
| Specific gravity | g/cm$^3$ | 1.30 | 1.31 | 1.30 | 1.31 | 1.30 | 1.30 |
| MFR | g/10min | 10.3 | 13.7 | 19.4 | 21.8 | 19.0 | 17.6 |
| Tensile modulus | MPa | 1898 | 1953 | 1890 | 1929 | 1880 | 1898 |
| Tensile Strength at Yield | MPa | 46.4 | 45.7 | 43.9 | 43.6 | 42.8 | 43.0 |
| Tensile elongation at break | % | 82.3 | 69.1 | 89.0 | 74.0 | 55.1 | 77.8 |
| Tensile Strength at break | MPa | 47.1 | 42.4 | 43.1 | 39.2 | 39.4 | 39.6 |
| Flexural modulus | MPa | 1930 | 1970 | 1920 | 1920 | 1960 | 1990 |
| Flexural strength at Yield | MPa | 73.8 | 74.0 | 69.6 | 68.9 | 68.1 | 69.4 |
| Notched Izod impact RT | J/m | 536 | 567 | 666 | 671 | 657 | 669 |
| Notched Izod impact -30°C | J/m | 206 | 164 | 173 | 139 | 212 | 195 |
| V0@ 1.0mm, normal | p(FTP) | 1.0 | 1.0 | 1.0 | 1.0 | 1.0 | 1.0 |
| | FOT 10(s) | 21.1 | 22.7 | 20.1 | 22.9 | 22.4 | 20.6 |
| V0@ 1.0mm, aging | p(FTP) | 1.0 | 1.0 | 1.0 | 1.0 | 1.0 | 1.0 |
| | FOT 10(s) | 24.6 | 22.2 | 21.0 | 19.8 | 22.6 | 22.0 |
| CTI | | PLC2 | PLC2 | PLCO | PLCO | PLC2 | PLC2 |
| | | C.01 | C.02 | Ex.01 | Ex.02 | C.03 | C.04 |

**Table 5B - Properties of Table 4B Compositions**

| Property | | C.05 | Ex.03 | C.06 | C.07 | Ex.04 | Ex.05 |
|---|---|---|---|---|---|---|---|
| Specific gravity | g/cm$^3$ | 1.30 | 1.29 | 1.27 | 1.26 | 1.27 | 1.27 |
| MFR | g/10min | 21.0 | 17.1 | 5.4 | 3.8 | 14.4 | 14.7 |
| Tensile modulus | MPa | 1882 | 1901 | 1557 | 1578 | 1962 | 2060 |
| Tensile Strength at Yield | MPa | 43.6 | 44.9 | 36.8 | 39.5 | 47.5 | 49.5 |
| Tensile elongation at break | % | 68.8 | 109.7 | 93.0 | 94.2 | 103.7 | 112.8 |
| Tensile Strength at break | MPa | 39.6 | 47.0 | 42.2 | 44.1 | 48.0 | 52.0 |

(continued)

| Property | | C.05 | Ex.03 | C.06 | C.07 | Ex.04 | Ex.05 |
|---|---|---|---|---|---|---|---|
| Flexural modulus | MPa | 1980 | 1980 | 1600 | 1650 | 1970 | 2090 |
| Flexural strength at Yield | MPa | 70.3 | 70.0 | 60.4 | 64.1 | 74.0 | 77.9 |
| Notched Izod impact RT | J/m | 547 | 682 | 710 | 743 | 705 | 777 |
| Notched Izod impact -30°C | J/m | 165 | 221 | 227 | 192 | 230 | 235 |
| V0@ 1.0mm, normal | p(FTP) | 1.0 | 1.0 | 0.99 | 0.84 | <0.5 | <0.5 |
| | FOT 10(s) | 20.3 | 20.6 | 38.0 | 43.6 | 56.0 | 38.0 |
| V0@ 1.0mm, aging | p(FTP) | 1.0 | 1.0 | 1.0 | 0.72 | <0.5 | <0.5 |
| | FOT 10(s) | 21.5 | 23.8 | 34.4 | 57.8 | 82.7 | 75.5 |
| CTI | | PLC3 | PLC0 | PLC0 | PLC0 | PLC0 | PLC0 |
| | | **C.05** | **Ex.03** | **C.06** | **C.07** | **Ex.04** | **Ex.05** |

**Table 5C - Properties of Table 4C Compositions**

| Property | | Ex.06 | Ex.07 | Ex.08 | Ex.09 | Ex.10 | Ex.11 |
|---|---|---|---|---|---|---|---|
| Specific gravity | $g/cm^3$ | 1.29 | 1.27 | 1.29 | 1.29 | 1.27 | 1.27 |
| MFR | g/10min | 17.0 | 12.1 | 12.2 | 12.7 | 15.4 | 15.9 |
| Tensile modulus | MPa | 1956 | 1906 | 1982 | 1996 | 2021 | 2097 |
| Tensile Strength at Yield | MPa | 46.8 | 45.2 | 47.3 | 46.2 | 48.1 | 49.2 |
| Tensile elongation at break | % | 106.5 | 111.1 | 90.3 | 101.7 | 115.1 | 112.8 |
| Tensile Strength at break | MPa | 45.5 | 50.5 | 46.9 | 44.2 | 53.5 | 51.5 |
| Flexural modulus | MPa | 1940 | 1920 | 2010 | 1990 | 2010 | 2152 |
| Flexural strength at Yield | MPa | 70.5 | 72.3 | 73.5 | 72.5 | 74.8 | 78.6 |
| Notched Izod impact RT | J/m | 769 | 783 | 860 | 820 | 730 | 796 |
| Notched Izod impact -30°C | J/m | 180 | 239 | 269 | 170 | 227 | 281 |
| V0@ 1.0mm, normal | p(FTP) | <0.5 | 0.87 | 0.94 | 0.96 | 1.0 | 0.96 |
| | FOT 10(s) | 42.0 | 50.4 | 43.3 | 43.0 | 52.5 | 56.9 |
| V0@ 1.0mm, aging | p(FTP) | <0.5 | 0.90 | 0.99 | 0.99 | 1.0 | 0.97 |
| | FOT 10(s) | 93.5 | 43.9 | 31.8 | 35.2 | 35.1 | 61.6 |
| CTI | | PLC0 | PLC0 | PLC0 | PLC0 | PLC0 | PLC0 |
| | | **Ex.06** | **Ex.07** | **Ex.08** | **Ex.09** | **Ex.10** | **Ex.11** |

**Table 5D - Properties of Table 4D Compositions**

| Property | | Ex.12 | C.08 | Ex.13 | Ex.14 | Ex.15 |
|---|---|---|---|---|---|---|
| Specific gravity | $g/cm^3$ | 1.29 | 1.29 | 1.27 | 1.29 | 1.28 |
| MFR | g/10min | 19.4 | 11.5 | 5.8 | 16.0 | 15.2 |
| Tensile modulus | MPa | 2022 | 1972 | 2043 | 1994 | 1929 |
| Tensile Strength at Yield | MPa | 48.0 | 48.2 | 50.2 | 48.7 | 45.8 |
| Tensile elongation at break | % | 93.8 | 83.5 | 63.8 | 99.7 | 105.5 |
| Tensile Strength at break | MPa | 42.6 | 47.6 | 44.9 | 49.2 | 47.6 |
| Flexural modulus | MPa | 2040 | 2000 | 2050 | 2050 | 1980 |
| Flexural strength at Yield | MPa | 75.9 | 76.6 | 77.8 | 76.8 | 72.1 |

(continued)

| Property | | Ex.12 | C.08 | Ex.13 | Ex.14 | Ex.15 |
|---|---|---|---|---|---|---|
| Notched Izod impact RT | J/m | 729 | 569 | 765 | 735 | 723 |
| Notched Izod impact -30°C | J/m | 221 | 247 | 193 | 211 | 203 |
| V0@ 1.0mm, normal | p(FTP) | 0.99 | 1.0 | 0.65 | 0.99 | 0.99 |
| | FOT 10(s) | 32.2 | 28.2 | 46.2 | 43.4 | 39.3 |
| V0@ 1.0mm, aging | p(FTP) | 1.0 | 1.0 | 0.99 | 0.99 | 0.99 |
| | FOT 10(s) | 26.5 | 25.6 | 44.8 | 48.2 | 41.1 |
| CTI | | PLC0 | PLC2 | PLC0 | PLC0 | PLC0 |
| | | **Ex.12** | **C.08** | **Ex.13** | **Ex.14** | **Ex.15** |

**Discussion of results:**

Comparing compositions C.01 and C.02 to Ex.01 and Ex.02, it was observed that use of the FR-245 aromatic bromine and cyanurate FR agent provides high CTI performance from CTI PLC2 to CTI PLCO. Additionally, Ex.01 and Ex.02 had high Izod impact performance above 650 joules per meter (J/m).

Comparing C.01-C.05 to Ex.01-Ex.03, it was observed that silicone loading affects CTI performance; compositions having a total silicone loading below 1.5 wt% could maintain a CTI rating at PLCO.

Comparing C.06 and C.07 to Ex.03, the comparative compositions including an E-MA-GMA copolymer or E-GMA copolymer (AX8900 or AX8840) as an impact modifier had good CTI performance, but the flexural modulus of the comparative compositions was below 1.9 gigapascals (1900 MPa), which limits the applications in which such impact modifiers may be used.

Example compositions Ex.04-Ex.12 had varying amounts and types of impact modifiers. These compositions had good flame retardancy, CTI, modulus, and impact properties.

Example compositions Ex.13-Ex.15 had varying types and amounts of impact modifiers and PC copolymers. These compositions had good flame retardancy, CTI, modulus and impact properties. In contrast, comparative composition C.08 including brominated polycarbonate had poor impact and CTI properties.

From these results, it was observed that example compositions including (1) brominated flame retardant including a combination of aromatic bromine and cyanurate, (2) an acrylic core-shell impact modifier, and (3) less than 2.0 wt% siloxane in the composition could achieve desired properties of CTI PLCO or CTI 600V, a tensile modulus of at least 1.9 GPa, and a notched Izod Impact strength of at least 650 J/m at room temperature.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

**1.** A thermoplastic composition comprising:

from about 35 wt% to about 65 wt% of a polycarbonate (PC) homopolymer component;
from about 5 wt% to about 30 wt% of a polybutylene terephthalate (PBT) component;
from about 5 wt% to about 20 wt% of a core-shell acrylic polymer component; and
from about 0.1 wt% to about 20 wt% of an aromatic bromine and cyanurate flame retardant component,
wherein the composition has a total siloxane content of no greater than 2.0 wt%, and

wherein the combined weight percent value of all components does not exceed 100 wt%, and all weight percent values are based on the total weight of the composition.

2. The thermoplastic composition according to claim 1, wherein the flame retardant component comprises tri(tribromophenyl) cyanurate.

3. The thermoplastic composition according to claim 1 or 2, wherein the composition further comprises from greater than 0 wt% to about 15 wt% of a polycarbonate copolymer component.

4. The thermoplastic composition according to claim 3, wherein the polycarbonate copolymer component comprises isophthalate-terephthalate-resorcinol ester monomer units and bisphenol-A monomer units, sebacic acid monomer units and bisphenol-A monomer units, a polycarbonate-siloxane copolymer, or a combination thereof.

5. The thermoplastic composition according to claim 4, wherein the polycarbonate copolymer component comprises from about 0.1 mol% to about 10 mol% sebacic acid monomer units and from about 90 mol% to about 99.9 mol% bisphenol-A monomer units.

6. The thermoplastic composition according to claim 4, wherein the polycarbonate copolymer component comprises a polycarbonate-siloxane copolymer, and wherein the polycarbonate siloxane copolymer has a siloxane content of from about 5 wt% to about 45 wt%.

7. The thermoplastic composition according to any of claims 1 to 6, wherein the core-shell acrylic polymer component comprises siloxane.

8. The thermoplastic composition according to any of claims 1 to 7, wherein the composition comprises at least one additional additive.

9. The thermoplastic composition according to claim 8, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

10. The thermoplastic composition according to claim 8 or 9, wherein the composition comprises from about 0.1 wt% to about 8 wt% of the at least one additional additive.

11. The thermoplastic composition according to any of claims 1 to 10, wherein the composition has a comparative tracking index (CTI) of CTI 600V as measured in accordance with IEC60112, or a CTI PLCO as measured in accordance with ASTM D3638.

12. The thermoplastic composition according to any of claims 1 to 11, wherein the composition has a flexural modulus of at least 1.9 gigapascals (GPa) as measured at a speed of 1.27 mm/min according to ASTMD790.

13. The thermoplastic composition according to any of claims 1 to 12, wherein the composition has a notched Izod impact strength of at least 650 joules per meter (J/m) at 25 °C as determined in accordance with ASTM D256.

14. The thermoplastic composition according to any of claims 1 to 13, wherein the composition has a V0 flame retardancy rating as tested at a thickness of 1.0 millimeter (mm) in accordance with UL94, or the composition has a p(FTP) flame retardancy performance of at least 0.9 as tested at a thickness of 1.0 mm in accordance with UL94.

15. An article comprising the thermoplastic composition according to any of claims 1 to 14, wherein the article is an electrical connector, insulating housing, an insulating material for a solar photovoltaic or electric vehicle, or other electrical equipment component.

Europäisches Patentamt
European Patent Office
Office européen des brevets

# EUROPEAN SEARCH REPORT

Application Number
EP 23 21 1080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 404 772 B2 (VAN DER MEE MARK [NL]; VAN GISBERGEN JOSEPHUS GERARDUS M [NL] ET AL.) 26 March 2013 (2013-03-26)<br>* page 1, line 4 - line 7 *<br>* claims 1,10; example CE8 *<br>----- | 1-15 | INV.<br>C08L69/00 |
| A | WO 2023/180190 A1 (COVESTRO DEUTSCHLAND AG [DE]) 28 September 2023 (2023-09-28)<br>* column 1, line 7 - line 10; examples CE3, CE4, CE5, CE7; table 3 *<br>----- | 1-15 | |

TECHNICAL FIELDS SEARCHED (IPC)

C09J
C08L

The present search report has been drawn up for all claims

1

| Place of search | Date of completion of the search | Examiner |
|---|---|---|
| The Hague | 10 April 2024 | Bezard, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 21 1080

This annex lists the patent family members relating to the patent documents cited in the above-mentioned European search report. The members are as contained in the European Patent Office EDP file on
The European Patent Office is in no way liable for these particulars which are merely given for the purpose of information.

10-04-2024

| Patent document cited in search report | | Publication date | Patent family member(s) | | | Publication date |
|---|---|---|---|---|---|---|
| US 8404772 | B2 | 26-03-2013 | CN | 103732665 | A | 16-04-2014 |
| | | | EP | 2663592 | A1 | 20-11-2013 |
| | | | KR | 20140034736 | A | 20-03-2014 |
| | | | US | 2012184661 | A1 | 19-07-2012 |
| | | | WO | 2012095821 | A1 | 19-07-2012 |
| WO 2023180190 | A1 | 28-09-2023 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- FR 245


### Non-patent literature cited in the description


- *CHEMICAL ABSTRACTS*, 79-94-7
- *CHEMICAL ABSTRACTS*, 80-05-7
- *CHEMICAL ABSTRACTS*, 31261-08-2
- *CHEMICAL ABSTRACTS*, 25852-37-3
- *CHEMICAL ABSTRACTS*, 25713-60-4